(19) Europäisches Patentamt
European Patent Office
Office européen des brevets

(11) Veröffentlichungsnummer: **0 488 930 B1**

(12) **EUROPÄISCHE PATENTSCHRIFT**

(45) Veröffentlichungstag der Patentschrift: **22.02.95**

(51) Int. Cl.$^{6}$: **C08L 25/12**, C08L 51/04, C08L 69/00, C08L 57/00

(21) Anmeldenummer: **91710041.4**

(22) Anmeldetag: **18.11.91**

# (54) ABS-Formmassen.

(30) Priorität: **29.11.90 DE 4038004**
**11.07.91 DE 4122870**

(43) Veröffentlichungstag der Anmeldung:
**03.06.92 Patentblatt 92/23**

(45) Bekanntmachung des Hinweises auf die Patenterteilung:
**22.02.95 Patentblatt 95/08**

(84) Benannte Vertragsstaaten:
**DE FR GB IT**

(56) Entgegenhaltungen:
**EP-A- 0 210 510**
**EP-A- 0 337 187**
**DE-A- 2 901 576**

(73) Patentinhaber: **BAYER AG**

**D-51368 Leverkusen (DE)**

(72) Erfinder: **Eichenauer, Herbert, Dr.**
**Gustav-Heineman-Strasse 3**
**W-4047 Dormagen 1 (DE)**
Erfinder: **Ott, Karl-Heinz, Dr.**
**Paul-Klee-Strasse 54**
**W-5090 Leverkusen 1 (DE)**
Erfinder: **Pischtschan, Alfred, Dr.**
**Zur Eiche 33**
**W-5067 Kürten-Eichhof (DE)**

**EP 0 488 930 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

ABS-Polymerisate zeichnen sich durch ausgewogene Zähigkeit, Härte, Oberflächenglanz und Verarbeitbarkeit aus und werden daher schon seit Jahren in großen Mengen als thermoplastisches Harz für die Herstellung von Formteilen aller Art eingesetzt.

Mit zunehmendem Einsatz dieser Polymerisate steigen jedoch auch die Anforderungen an die ABS-Werkstoffe, insbesondere dann, wenn daraus neuartige Teile hergestellt werden oder neue Anwendungsbereiche unter Einsatz dieser thermoplastischen Werkstoffe erschlossen werden sollen.

So werden für neuartige Anwendungen, z.B. für die Herstellung großflächiger Teile oder Teile mit langen Fließwegen (z.B. im Automobilbereich oder im Gehäusesektor), Materialien benötigt, die eine Kombination aus hoher Zähigkeit, genügend hoher Wärmeformbeständigkeit, möglichst gezielt einstellbarem Oberflächenglanz und ausgezeichneter thermoplastischer Verarbeitbarkeit aufweisen.

ABS-Werkstoffe, die jeder der geforderten Eigenschaften für sich alleine erfüllen, sind bekannt Z.B. werden ABS-Polymerisate mit hoher Zähigkeit in der EP-A 116 330 beschrieben; allerdings sind hierbei nur hochglänzende Systeme mit geringen Wärmeformbeständigkeiten erhältlich.

ABS-Polymere mit matter Oberfläche sind z.B. in EP-A 139 271 beschrieben; die Herstellung dieser Polymerisate ist jedoch relativ kompliziert.

Die Herstellung von ABS-Polymerisaten mit sehr guter Fließfähigkeit durch Zusatz hoher Gleitmittelmengen ist ebenfalls bekannt, gleichzeitig werden durch diese Maßnahme jedoch die sonstigen Eigenschaften negativ beeinflußt.

Es wurde gefunden, daß Formmassen vom ABS-Typ mit der geforderten Kombination aus sehr hoher Zähigkeit, genügend hoher Wärmeformbeständigkeit, gezielt einstellbarem geringem Oberflächenglanz und ausgezeichneter thermoplastischer Verarbeitbarkeit bestehen aus

A) 10 bis 80 Gew.-Teilen, vorzugsweise 20 bis 70 Gew.-Teilen, eines oder mehrerer thermoplastischer Co- oder Terpolymerisate, aufgebaut aus wenigstens einer polymerisierten Vinylmonomerkombination, ausgewählt aus Styrol, α-Methylstyrol, Methylmethacrylat, Acrylnitril mit einem mittleren Molekulargewicht ($\overline{M}_w$) von 120 000 bis 200 000, vorzugsweise von 120 000 bis 150 000,

B) 5 bis 60 Gew.-Teilen, vorzugsweise 7,5 bis 50 Gew.-Teilen, eines oder mehrerer thermoplastischer Copolymerisate aufgebaut aus 60 bis 95 Gew.-%, vorzugsweise 65 bis 85 Gew.-%, Styrol, und 40 bis 5 Gew.-%, vorzugsweise 35 bis 15 Gew.-%, Acrylnitril mit einem mittleren Molekulargewicht ($\overline{M}_w$) von 50 000 bis 80 000, vorzugsweise von 60 000 bis 80 000,

C) 0,1 bis 20 Gew.-Teilen, vorzugsweise 0,5 bis 10 Gew.-Teilen, eines oder mehrerer thermoplastischer Co- oder Terpolymerisate, aufgebaut aus wenigstens einer polymerisierten Vinylmonomerenkombination, ausgewählt aus Styrol, α-Methylstyrol, Methylmethacrylat, Acrylnitril mit einem mittleren Molekulargewicht ($\overline{M}_w$) von 1500 bis 6000, vorzugsweise von 2000 bis 6000,

D) 0,5 bis 40 Gew.-Teilen, vorzugsweise 1 bis 30 Gew.-Teilen, insbesondere 12 bis 30 Gew.-Teilen, eines teilchenförmigen gepfropften Kautschuks mit einer Glastemperatur ≦ 10 °C und einen mittleren Teilchendurchmesser ($d_{50}$) von 0,05 bis 0,5 µm, vorzugsweise von 0,1 bis 0,4 µm, der pro 100 Gew.-Teile Kautschuk 30 bis 80 Gew.-Teile, vorzugsweise 35 bis 75 Gew.-Teile, eines Polymerisats aus Styrol, Methylmethacrylat, Acrylnitril oder Mischungen daraus chemisch gebunden enthält, und

E) 0,5 bis 30 Gew.-Teilen, vorzugsweise 1 bis 20 Gew.-Teilen, insbesondere 2,5 bis 20 Gew.-Teilen, eines teilchenförmigen gepfropften Kautschuks mit einer Glastemperatur ≦ 10 °C und einem mittleren Teilchendurchmesser ($d_{50}$) von 1 bis 5 µm, vorzugsweise von 1,2 bis 3 µm, der pro 100 Gew.-Teile Kautschuk 100 bis 150 Gew.-Teile, vorzugsweise 110 bis 140 Gew.-Teile, eines Polymerisats aus Styrol, α-Methylstyrol, Methylmethacrylat, Acrylnitril oder Mischungen daraus chemisch gebunden enthält,
und gegebenenfalls

F) 20 bis 200 Gew.-Teile, vorzugsweise 25 bis 150 Gew.-Teile (jeweils bezogen auf 100 Gew.-Teile A + B + C + D + E), eines oder mehrerer aromatischer Polycarbonate.

Die Herstellung der erfindungsgemäßen Formmassen erfolgt durch so langes Vermischen von A, B, C, D, und E in der Schmelze, gegebenenfalls unter Zusatz üblicher Additive, bis ein homogener Zustand erreicht ist.

Ein bevorzugtes Verfahren zur Herstellung der Formmassen ist, zunächst B, C und D zu mischen und anschließend diese Mischung mit einer Mischung von A, E und gegebenenfalls F zu vermischen.

Erfindungsgemäß geeignete thermoplastische Polymerisate gemäß A sind solche aus wenigstens einer Monomerenkombination ausgewählt aus Styrol, α-Methylstyrol, Methylmethacrylat, Acrylnitril. Besonders bevorzugte Polymerisate A sind solche aus Styrol/Acrylnitril-Gemischen und Styrol/α-Methylstyrol/Acrylnitril-Gemischen.

Die Polymerisate A sind bekannt und lassen sich durch radikalische Polymerisation, insbesondere durch Emulsions-, Suspensions-, Lösungs- oder Massepolymerisation herstellen (z.B. gemäß DE-OS 2 619 969); sie können z.B. auch bei der in Emulsion, Suspension, Lösung oder Masse durchgeführten Pfropfpolymerisation in Form von nicht chemisch an die Pfropfgrundlage (im allgemeinen Kautschuk) gebundenen Polymeren entstehen. Sie müssen mittlere Molekulargewichte ($\overline{M}_w$) zwischen 120 000 und 200 000, vorzugsweise zwischen 120 000 und 150 000, aufweisen.

Erfindungsgemäß geeignete thermoplastische Polymerisate B sind solche aus 60 bis 95 Gew.-%, vorzugsweise 65 bis 85 Gew.-%, Styrol und 40 bis 5 Gew.-%, vorzugsweise 35 bis 15 Gew.-%, Acrylnitril.

Die Polymerisate B sind bekannt und können durch radikalische Polymerisation, insbesondere durch Emulsions-, Suspensions-, Lösungs- oder Massepolymerisation hergestellt werden (z.B. gemäß DE-OS 2 619 969). Sie müssen mittlere Molekulargewichte ($\overline{M}_w$) zwischen 50 000 und 80 000, vorzugsweise zwischen 60 000 und 80 000, aufweisen.

Erfindungsgemäß geeignete thermoplastische Polymerisate C sind solche aus wenigstens einer Monomerenkombination ausgewählt aus Styrol, α-Methylstyrol, Methylmethacrylat, Acrylnitril. Besonders bevorzugte Polymerisate C sind solche aus Styrol/Acrylnitril-Gemischen, α-Methylstyrol/Acrylnitril-Gemischen, Styrol/α-Methylstyrol/Acrylnitril-Gemischen.

Die Polymerisate C sind bekannt und lassen sich durch radikalische Polymerisation, insbesondere durch Emulsions-, Suspensions-, Lösungs- oder Massepolymerisation herstellen (z.B. gemäß DE-OS 2 619 969 unter Verwendung molekulargewichtsregelnder Verbindungen). Sie müssen mittlere Molekulargewichte ($\overline{M}_w$) zwischen 1500 und 6000, vorzugsweise zwischen 2000 und 6000, aufweisen.

Zur Herstellung des ersten gepfropften Kautschuks (Komponente D) geeignete Kautschuke mit einer Glastemperatur ≦ 10 °C sind insbesondere Polybutadien, Butadien/Styrol-Copolymerisate, Butadien/Acrylnitril-Copolymerisate, Polyisopren oder Alkylacrylatkautschuke auf der Basis von $C_1$-$C_8$-Alkylacrylaten, insbesondere Ethyl-, Butyl-, Ethylhexylacrylat.

Die Alkylacrylatkautschuke können gegebenenfalls bis zu 30 Gew.-% (bezogen auf Kautschukgewicht) Monomere wie Vinylacetat, Acrylnitril, Styrol, Methylmethacrylat und/oder Vinylether copolymerisiert enthalten. Die Alkylacrylatkautschuke können weiterhin kleinere Mengen, vorzugsweise bis zu 5 Gew.-% (bezogen auf Kautschukgewicht) vernetzend wirkender ethylenisch ungesättigter Monomerer enthalten. Solche Vernetzer sind z.B. Alkylendioldiacrylate und -methacrylate, Polyester-diacrylate und -methacrylate, Divinylbenzol, Trivinylbenzol, Triallylcyanurat, Allylacrylat, Allylmethacrylat, Butadien oder Isopren.

Pfropfgrundlage können auch Acrylatkautschuke mit Kern/Mantel-Struktur sein mit einem Kern aus vernetztem Dienkautschuk aus einem oder mehreren konjugierten Dienen, wie Polybutadien, oder ein Copolymerisat eines konjugierten Diens mit einem ethylenisch ungesättigten Monomer wie Styrol und/oder Acrylnitril.

Bevorzugter Kautschuk zur Herstellung der Pfropfkautschuke D) ist Polybutadien.

Die Kautschuke liegen im Pfropfkautschuk D in Form wenigstens partiell vernetzter Teilchen eines mittleren Teilchendurchmessers von 0,05 bis 0,5 µm, bevorzugt von 0,1 bis 0,4 µm, vor.

Die Pfropfkautschuke D enthalten pro 100 Gew.-Teile Kautschuk 30 bis 80 Gew.-Teile, vorzugsweise 35 bis 75 Gew.-Teile, eines Polymerisats aus Styrol, Methylmethacrylat, Acrylnitril oder Mischungen daraus chemisch gebunden.

Die Pfropfkautschuke D werden durch radikalische Pfropfpolymerisation der oben angegebenen Monomeren(gemische) (Styrol, Methylmethacrylat, Acrylnitril) in Gegenwart der zu pfropfenden Kautschuke, vorzugsweise durch Emulsionspolymerisation, hergestellt; sie sind durchweg bekannt (vgl. z.B. DE-OS 1 300 241).

Besonders bevorzugte Pfropfkautschuke D sind die ABS-Polymerisate.

Zur Herstellung des zweiten gepfropften Kautschuks E geeignete Kautschuke mit einer Glastemperatur ≦ 10 °C sind insbesondere Polybutadien, Butadien/Styrol-Copolymerisate, Butadien/Acrylnitril-Copolymerisate und Polyisopren.

Bevorzugte Kautschuke zur Herstellung der Pfropfkautschuke E sind Polybutadien und Butadien/Styrol-Copolymerisate.

Die Kautschuke liegen im Pfropfkautschuk E in Form wenigstens partiell vernetzter Teilchen eines mittleren Teilchendurchmessers ($d_{50}$) von 1 bis 5 µm, vorzugsweise von 1,2 bis 3 µm, vor.

Die Pfropfkautschuke E enthalten pro 100 Gew.-Teile Kautschuk 100 bis 150 Gew.-Teile, vorzugsweise 110 bis 140 Gew.-Teile, eines Polymerisats aus Styrol, α-Methylstyrol, Methylmethacrylat, Acrylnitril oder Mischungen daraus chemisch gebunden.

Die Pfropfkautschuke E werden durch radikalische Pfropfpolymerisation der oben angegebenen Monomeren(gemische) (Styrol, α-Methylstyrol, Methylmethacrylat, Acrylnitril) in Gegenwart der zu pfropfenden Kautschuke, vorzugsweise durch Lösungs- oder Massepolymerisation, hergestellt; sie sind durchweg

bekannt (vgl. z.B. DE-OS 3 100 785). Besonders bevorzugte Pfropfkautschuke E sind ABS-Polymerisate.

Geeignete Polycarbonate F können sowohl Homopolycarbonate als auch Copolycarbonate aus den Diphenolen der Formeln (I) und (II) sein

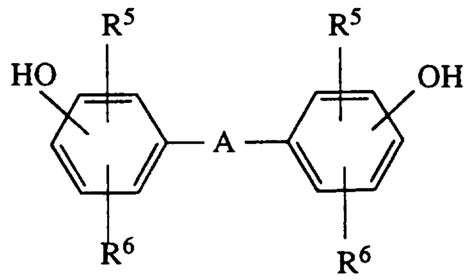

(I)

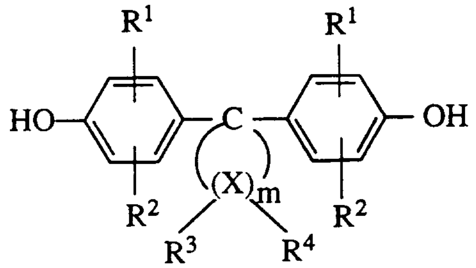

(II),

worin

A eine Einfachbindung, $C_1$-$C_5$-Alkylen, $C_2$-$C_5$-Alkyliden, $C_5$-$C_6$-Cycloalkyliden, -O-, -S- oder $-SO_2-$ ist,

$R^5$ und $R^6$ unabhängig voneinander für Methyl oder Halogen, insbesondere für Methyl, Chlor oder Brom stehen,

$R^1$ und $R^2$ unabhängig voneinander Wasserstoff, Halogen, bevorzugt Chlor oder Brom, $C_1$-$C_8$-Alkyl, bevorzugt Methyl, Ethyl, $C_5$-$C_6$-Cycloalkyl, bevorzugt Cyclohexyl, $C_6$-$C_{10}$-Aryl, bevorzugt Phenyl, oder $C_7$-$C_{12}$-Aralkyl, bevorzugt Phenyl-$C_1$-$C_4$-alkyl, insbesondere Benzyl, bedeuten,

m eine ganze Zähl von 4 bis 7, bevorzugt 4 oder 5, ist,

$R^3$ und $R^4$ für jedes X individuell wählbar sind und unabhängig voneinander Wasserstoff oder $C_1$-$C_6$-Alkyl bedeuten und

X Kohlenstoff bedeutet.

Die Polycarbonate gemäß Komponente F können sowohl linear als auch verzweigt sein, sie können aromtisch gebundenes Halogen, vorzugsweise Brom und/oder Chlor enthalten, sie können aber auch frei von aromatisch gebundenem Halogen, also halogenfrei, sein.

Die Polycarbonate F können sowohl einzeln als auch im Gemisch eingesetzt werden.

Die Diphenole der Formeln (I) und (II) sind entweder literaturbekannt oder nach literaturbekannten Verfahren herstellbar (siehe z.B. EP-A 0 359 953).

Die Herstellung der erfindungsgemäß geeigneten Polycarbonate gemäß Komponente F ist literaturbekannt und kann z.B. mit Phosgen nach dem Phasengrenzflächenverfahren oder mit Phosgen nach dem Vefahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird.

Geeignete Kettenabbrecher sind z.B. Phenol oder p-tert.-Butylphenol, aber auch langkettige Alkylphenole wie 4-(1,3-Tetramethyl-butyl)phenol gemäß DE-OS 28 42 005 oder Monoalkylphenole oder Dialkylphenole mit insgesamt 8 bis 20 C-Atomen in den Alkylsubstituenten gemäß deutscher Offenlegungsschrift Nr. 35 06 472, wie z.B. p-Nonylphenyl, 2,5-di-tert.-Butylphenol, p-tert.-Octylphenol, p-Dodecylphenol, 2-(3,5-Dimethylheptyl)-phenol und 4-(3,5-Dimethylheptyl)-phenol. Die Menge an einzusetzenden Kettenabbrechern beträgt im allgemeinen zwischen 0,5 und 10 Mol-%, bezogen auf die Summe der jeweils eingesetzen Diphenole (I) und (II).

Die erfindungsgemäß geeigneten Polycarbonate gemäß Komponente F können in bekannter Weise verzweigt sein, und zwar vorzugsweise durch den Einbau von 0,05 bis 2,0 Mol-%, bezogen auf die Summe

der eingesetzten Diphenole, an drei- oder mehr als dreifunktionellen Verbindungen, z.B. solchen mit drei oder mehr als drei phenolischen OH-Gruppen.

Sie haben mittlere Gewichtsmittelmolekulargewichte ($\overline{M}_w$, gemessen z.B. durch Ultrazentrifugation oder Streulichtmessung) von 10 000 bis 200 000, vorzugsweise von 20 000 bis 80 000.

Geeignete Diphenole der Formeln (I) und (II) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 2,2-Bis-(4-hydroxy-3,5-dimethylphenyl)-propan, 2,2-Bis-(4-hydroxy-3,5-dichlorphenyl)-propan, 2,2-Bis-(4-hydroxy-3,5-dibromphenyl)-propan, 1,1-Bis-(4-hydroxyphenyl)-cyclohexan, 1,1-Bis-(4-hydroxyphenyl)-3,3,5-trimethylcyclohexan, 1,1-Bis-(4-hydroxyphenyl)-3,3-dimethylcyclohexan, 1,1-Bis-(4-hydroxyphenyl)-3,3,5,5-tetramethylcyclohexan oder 1,1-Bis-(4-hydroxyphenyl)-2,4,4-trimethylcyclopentan.

Bevorzugte Diphenole der Formel (I) sind 2,2-Bis-(4-hydroxyphenyl)-propan und 1,1-Bis-(4-hydroxyphenyl)-cyclohexan, bevorzugtes Phenol der Formel (II) ist 1,1-Bis-(4-hydroxyphenyl)-3,3,5-trimethylcyclohexan.

Es können auch Mischungen von Diphenolen eingesetzt werden.

Die erfindungsgemäßen Mischungen, enthaltend A, B, C, D, E, gegebenenfalls F und gegebenenfalls übliche Zusatzstoffe wie Gleitmittel, Stabilisatoren, Pigmente, Entformungsmittel, Antistatika, Füllstoffe (z.B. Glasfasern, Glaskugeln, Kieselgel) werden hergestellt, indem man die jeweiligen Bestandteile in bekannter Weise simultan oder sukzessive bei Raumtemperatur oder bei höherer Temperatur vermischt und danach bei Temperaturen von 150 °C bis 300 °C in gebräuchlichen Aggregaten wie Innenknetern, Extrudern oder Doppelwellenschnecken schmelzcompoundiert oder schmelzextrudiert.

Ein bevorzugtes Verfahren zur Herstellung der Formmassen durch Vermischen spezieller Kombinationen von Einzelkomponenten ist oben beschrieben; durch dieses Verfahren gelingt die Erzeugung von Formmassen, die zu Formteilen mit besonders einheitlichen Oberflächen führen.

Die Formmassen der vorliegenden Erfindung können zur Herstellung von Formkörpern jeder Art verwendet werden, wobei übliche Herstellungsweisen benutzt werden können; insbesondere eignen sie sich zur Herstellung von solchen Teilen, bei denen eine Kombination aus hoher Zähigkeit, ausgezeichneter thermoplastischer Verarbeitbarkeit und gezielt einstellbarem geringem Oberflächenglanz gefordert wird wie z.B. großflächige Verkleidungen für den Kfz.-Innenraum mit langen Fließwegen oder Gehäuse für Radio- und Fernsehgeräte oder Computer, die z.B. sehr viele Rippen aufweisen.

Die Verarbeitung der Formmassen zu Formkörpern erfolgt vorzugsweise durch Spritzgießen, kann aber auch z.B. durch Tiefziehen aus vorher nach bekannten Verfahren hergestellten Platten oder Folien durchgeführt werden.

Die oben angegebenen Teilchengrößen bedeuten immer mittlerer Teilchendurchmesser $d_{50}$, ermittelt durch Ultrazentrifugenmessungen nach W. Scholtan et al., Kolloid-Z. u.Z. Polymere 250 (1972), 782-796 oder durch Ausmessung elektronenmikroskopischer Aufnahmen.

## Beispiele

### Thermoplastisches Harz A1

Statistisches Styrol/Acrylnitril = 72:28 -Copolymerisat mit einem $\overline{M}w$ von ca. 135 000, erhalten durch "Nebenherpolymerisation" von Styrol und Acrylnitril (nicht aufgepfropftes Styrol/Acrylnitril-Copolymer) bei der Herstellung eines Pfropfkautschuks durch radikalische Lösungspolymerisation

### Thermoplastisches Harz A2

Statistisches Styrol/Acrylnitril = 72:28 -Copolymerisat mit einem $\overline{M}w$ von ca. 125 000, erhalten durch radikalische Emulsionspolymerisation.

### Thermoplastisches Harz B

Statistisches Styrol/Acrylnitril = 72:28 -Copolymerisat mit einem $\overline{M}w$ von ca. 72 000, erhalten durch radikalische Lösungspolymerisation.

### Thermoplastisches Harz C

Statistisches Styrol/Acrylnitril = 72:28 -Copolymerisat mit einem $\overline{M}w$ von ca. 4000, erhalten durch radikalische Emulsionspolymerisation.

Pfropfkautschuk D

Pfropfkautschuk erhalten durch radikalische Emulsionspolymerisation eines Styrol/Acrylnitril = 72:28 -Gemisches unter Verwendung eines teilchenförmigen Polybutadiens, wobei ein mittlerer Teilchendurchmesser ($d_{50}$) von ca. 0,33 $\mu$m resultiert und pro 100 Gew.-Teile Polybutadien 55 Gew.-Teile Styrol/Acrylnitril-Copolymerisat chemisch an das Polybutadien gebunden sind.

Pfropfkautschuk E

Pfropfkautschuk erhalten durch radikalische Lösungspolymerisation eines Styrol/Acrylnitril = 72:28 -Gemisches unter Verwendung eines Polybutadiens, wobei ein mittlerer Teilchendurchmesser ($d_{50}$) von ca. 1,2 $\mu$m resultiert und pro 100 Gew.-Teile Polybutadien 110 Gew.-Teile Styrol/Acrylnitril-Copolymerisat chemisch an das Polybutadien gebunden sind.

Die Compoundierung der Einsatzkomponenten erfolgte auf einem 4,5 l Innenkneter bei Temperaturen zwischen 160 °C und 220 °C. Die Herstellung der Formkörper erfolgte auf einer Spritzgießmaschine bei 240 °C.

Die Kerbschlagzähigkeit ($a_k$) wurde bei Raumtemperatur nach ISO 180/1A (Einheit kJ/$m^2$) ermittelt, die Verarbeitbarkeit wurde durch Messung des Volumen-Fließindex MVI nach DIN 53 735 U (Einheit: $cm^3$/10 min) sowie des notwendigen Fülldruckes (siehe F. Johannaber, Kunststoffe 74 (1984), 1, Seiten 2-5), die Wärmeformbeständigkeit wurde nach Vicat (Methode B) gemäß DIN 53 460 (Einheit: °C) gemessen. Die Glanzmessung erfolgte nach DIN 67 530 an einer ebenen Platte bei einem Reflektionswinkel von 60° (Reflektometerwert) mit Hilfe des Mehrwinkel-Reflektometers "Multi-Gloss" der Firma Byk-Mallinckrodt.

In Tabelle 1 sind die Zusammensetzungen der untersuchten Formmassen, in Tabelle 2 die erhaltenen Meßdaten zusammengestellt. Gegenüber den Vergleichsversuchen weisen nur die erfindungsgemäßen Mischungen hohe Zähigkeit, gute Wärmeformbeständigkeit, ausgezeichnete Verarbeitbarkeit und einstellbaren Glanzgrad auf.

Tabelle 1: Zusammensetzung der Formmassen

| Beispiel | A1 Gew.-Teile | A2 Gew.-Teile | B Gew.-Teile | C Gew.-Teile | D Gew.-Teile | E Gew.-Teile |
|---|---|---|---|---|---|---|
| 1 | 10 | 8 | 48 | 2 | 29,5 | 2,5 |
| 2 | 20 | 7,5 | 38 | 2 | 27,5 | 5 |
| 3 | 39,5 | 6,5 | 18,5 | 1,5 | 23,5 | 10,5 |
| 4 | 20 | 34,5 | 10 | 3 | 27,5 | 5 |
| 5 | 39,5 | 19,5 | 5 | 2 | 23,5 | 10,5 |
| 6 | 59 | 7 | 5 | 1 | 12 | 16 |
| 7 (Vergleich) | 79 | - - | - - | - - | - - | 21 |
| 8 (Vergleich) | - - | 76 | - - | - - | 24 | - - |
| 9 (Vergleich) | - - | 68,5 | - - | - - | 31,5 | - - |
| 10 (Vergleich) | - - | 8,5 | 60 | - - | 31,5 | - - |

Tabelle 2: Meßdaten der Formmassen

| Beispiel | $a_k$ (kJ/$m^2$) | Vicat B (°C) | Fülldruck (bar) | MVI ($cm^3$/10 min) | Glanzgrad |
|---|---|---|---|---|---|
| 1 | 31 | 97 | 141 | 15,1 | 78 |
| 2 | 35 | 98 | 152 | 12,0 | 65 |
| 3 | 41 | 97 | 170 | 8,8 | 58 |
| 4 | 38 | 101 | 175 | 8,8 | 68 |
| 5 | 43 | 101 | 180 | 8,3 | 53 |
| 6 | 38 | 101 | 187 | 7,9 | 50 |
| 7 (Vergleich) | 26 | 104 | 200 | 5,0 | 52 |
| 8 (Vergleich) | 22 | 103 | 195 | 7,3 | 83 |
| 9 (Vergleich) | 30 | 102 | 211 | 4,7 | 78 |
| 10 (Vergleich) | 21 | 97 | 165 | 9,5 | 70 |

**Patentansprüche**

**1.** Thermoplastische Formmassen enthaltend

A) 10 bis 80 Gew.-Teile, eines oder mehrerer thermoplastischer Co- oder Terpolymerisate, aufgebaut aus wenigstens einer polymerisierten Vinylmonomerkombination, ausgewählt aus Styrol, α-Methylstyrol, Methylmethacrylat, Acrylnitril mit einem mittleren Molekulargewicht ($\overline{M}_w$) von 120 000 bis 200 000,

B) 5 bis 60 Gew.-Teile eines oder mehrerer thermoplastischer Copolymerisate, aufgebaut aus 60 bis 95 Gew.-% Styrol und 40 bis 5 Gew.-% Acrylnitril, mit einem mittleren Molekulargewicht ($\overline{M}_w$) von 50 000 bis 80 000,

C) 0,1 bis 20 Gew.-Teile, eines oder mehrerer thermoplastischer Co- oder Terpolymerisate, aufgebaut aus wenigstens einer polymerisierten Vinylmonomerenkombination, ausgewählt aus Styrol, α-Methylstyrol, Methylmethacrylat, Acrylnitril mit einem mittleren Molekulargewicht ($\overline{M}_w$) von 1500 bis 6000,

D) 0,5 bis 40 Gew.-Teile, eines teilchenförmigen gepfropften Kautschuks mit einer Glastemperatur ≦ 10 °C und einem mittleren Teilchendurchmesser ($d_{50}$) von 0,05 bis 0,5 µm, der pro 100 Gew.-Teile Kautschuk 30 bis 80 Gew.-Teile, eines Polymerisats aus Styrol, Methylmethacrylat, Acrylnitril oder Mischungen daraus chemisch gebunden enthält, und

E) 0,5 bis 30 Gew.-Teile eines teilchenförmigen gepfropften Kautschuks mit einer Glastemperatur ≦ 10 °C und einem mittleren Teilchendurchmesser ($d_{50}$) von 1 bis 5 µm, der pro 100 Gew.-Teile Kautschuk 100 bis 150 Gew.-Teile eines Polymerisats aus Styrol, α-Methylstyrol,Methylmethacrylat, Acrylnitril oder Mischungen daraus chemisch gebunden enthält,

und gegebenenfalls

F) 20 bis 200 Gew.-Teile (bezogen auf 100 Gew.-Teile A+B+C+D+E) eines oder mehrerer aromatischer Polycarbonate enthält.

**2.** Thermoplastische Formmassen enthaltend

A) 20 bis 70 Gew.-Teile eines oder mehrerer thermoplastischer Co- oder Terpolymerisate, aufgebaut aus wenigstgens einer polymerisierten Vinylmonomerkombination, ausgewählt aus Styrol, α-Methylstyrol, Methylmethacrylat, Acrylnitril mit einem mittleren Molekulargewicht ($\overline{M}_w$) von 120 000 bis 150 000,

B) 7,5 bis 50 Gew.-Teile eines oder mehrerer thermoplastischer Copolymerisate, aufgebaut aus 65 bis 85 Gew.-% Styrol und 35 bis 15 Gew.-% Acrylnitril mit einem mittleren Molekulargewicht ($\overline{M}_w$) von 60 000 bis 80 000,

C) 0,5 bis 10 Gew.-Teile eines oder mehrerer thermoplastischer Co- oder Terpolymerisate, aufgebaut aus wenigstens einer polymerisierten Vinylmonomerenkombination, ausgewählt aus Styrol, α-Methylstyrol, Methylmethacrylat, Acrylnitril mit einem mittleren Molekulargewicht ($\overline{M}_w$) von 2000 bis 6000,

D) 1 bis 30 Gew.-Teile eines teilchenförmigen gepfropften Kautschuks mit einer Glastemperatur ≦ 10 °C und einen mittleren Teilchendurchmesser ($d_{50}$) von 0,1 bis 0,4 µm, der pro 100 Gew.-Teile Kautschuk 35 bis 75 Gew.-Teile eine Polymerisats aus Styrol, Methylmethacrylat, Acrylnitril oder Mischungen daraus chemisch gebunden enthält, und

E) 1 bis 20 Gew.-Teile eines teilchenförmigen gepfropften Kautschuks mit einer Glastemperatur ≦ 10 °C und einem mittleren Teilchendurchmesser ($d_{50}$) von 1,2 bis 3 µm, der pro 100 Gew.-Teile Kautschuk 110 bis 140 Gew.-Teile eines Polymerisats aus Styrol, α-Methylstyrol, Methylmethacrylat, Acrylnitril oder Mischungen daraus chemisch gebunden enthält,

und gegebenenfalls

F) 25 bis 150 Gew.-Teile (bezogen auf 100 Gew.-Teile A+B+C+D+E) eines oder mehrerer aromatischer Polycarbonate.

**3.** Verfahren zur Herstellung von thermoplastischen Formmassen gemäß den Ansprüchen 1 und 2, dadurch gekennzeichnet, daß zunächst die Komponenten B, C und D gemischt werden, und anschließend die resultierende Mischung mit einer Mischung der Komponenten A, E und gegebenenfalls F vermischt wird.

**4.** Verwendung der Formmassen gemäß Anspruch 1 zur Herstellung von Formkörpern.

## Claims

**1.** Thermoplastic moulding compounds containing

A) 10 to 80 parts by weight of one or more thermoplastic copolymers or terpolymers synthesized from at least one polymerized vinyl monomer combination selected from styrene, α-methyl styrene, methyl methacrylate, acrylonitrile having an average molecular weight ($\overline{M}_w$) in the range from 120,000 to 200,000,

B) 5 to 60 parts by weight of one or more thermoplastic copolymers synthesized from 60 to 95% by weight styrene and 40 to 5% by weight acrylonitrile having an average molecular weight ($\overline{M}_w$) in the range from 50,000 to 80,000,

C) 0.1 to 20 parts by weight of one or more thermoplastic copolymers or terpolymers synthesized from at least one polymerized vinyl monomer combination selected from styrene, α-methyl styrene, methyl methacrylate, acrylonitrile having an average molecular weight ($\overline{M}_w$) in the range from 1,500 to 6,000,

D) 0.5 to 40 parts by weight of a particulate grafted rubber having a glass temperature of ≦ 10 °C and an average particle diameter ($d_{50}$) of 0.05 to 0.5 µm which contains per 100 parts by weight rubber from 30 to 80 parts by weight of a polymer of styrene, methyl methacrylate, acrylonitrile or mixtures thereof in chemically bound form and

E) 0.5 to 30 parts by weight of a particulate grafted rubber having a glass temperature of ≦ 10 °C and an average particle diameter ($d_{50}$) of 1 to 5 µm which contains per 100 parts by weight rubber from 100 to 150 parts by weight of a polymer of styrene, α-methyl styrene, methyl methacrylate, acrylonitrile or mixtures thereof in chemically bound form

and optionally

F) 20 to 200 parts by weight (based on 100 parts by weight of A+B+C+D+E) of one or more aromatic polycarbonates.

**2.** Thermoplastic moulding compounds containing

A) 20 to 70 parts by weight of one or more thermoplastic copolymers or terpolymers synthesized from at least one polymerized vinyl monomer combination selected from styrene, α-methyl styrene, methyl methacrylate, acrylonitrile having an average molecular weight ($\overline{M}_w$) in the range from 120,000 to 150,000,

B) 7.5 to 50 parts by weight of one or more thermoplastic copolymers synthesized from 65 to 85% by weight styrene and 35 to 15% by weight acrylonitrile having an average molecular weight ($\overline{M}_w$) in the range from 60,000 to 80,000,

C) 0.5 to 10 parts by weight of one or more thermoplastic copolymers or terpolymers synthesized from at least one polymerized vinyl monomer combination selected from styrene, α-methyl styrene, methyl methacrylate, acrylonitrile having an average molecular weight ($\overline{M}_w$) in the range from 2,000 to 6,000,

D) 1 to 30 parts by weight of a particulate grafted rubber having a glass temperature of ≦ 10 °C and an average particle diameter ($d_{50}$) of 0.1 to 0.4 µm which contains per 100 parts by weight rubber from 35 to 75 parts by weight of a polymer of styrene, α-methyl styrene, methyl methacrylate, acrylonitrile or mixtures thereof in chemically bound form and

E) 1 to 20 parts by weight of a particulate grafted rubber having a glass temperature of ≦ 10 °C and an average particle diameter ($d_{50}$) of 1.2 to 3 µm which contains per 100 parts by weight rubber from 110 to 140 parts by weight of a polymer of styrene, methyl methacrylate, acrylonitrile or mixtures thereof in

F) 25 to 150 parts by weight (based on 100 parts by weight of A+B+C+D+E) of one or more aromatic polycarbonates.

**3.** A process for the production of the thermoplastic moulding compounds claimed in claims 1 and 2, characterized in that components B, C and D are mixed and the resulting mixture is subsequently mixed with a mixture of components A, E and optionally F.

**4.** The use of the moulding compounds claimed in claim 1 for the production of mouldings.

**Revendications**

**1.** Compositions thermoplastiques à mouler, contenant :

(A) 10 à 80 parties en poids d'un ou plusieurs copolymères ou terpolymères thermoplastiques, obtenus à partir d'au moins une combinaison de monomère vinylique polymérisée, choisis parmi le styrène, l'α-méthylstyrène, le méthacrylate de méthyle, l'acrylonitrile, ayant un poids moléculaire moyen ($\overline{M}_p$) de 120 000 à 200 000,

(B) 5 à 60 parties en poids d'un ou plusieurs copolymères thermoplastiques, formés de 60 à 95 % en poids de styrène et de 40 à 5 % en poids d'acrylonitrile, ayant un poids moléculaire moyen ($\overline{M}_p$) de 50 000 à 80 000,

(C) 0,1 à 20 parties en poids d'un ou plusieurs copolymères ou terpolymères thermoplastiques, formés à partir d'au moins une combinaison de monomères vinyliques polymérisée, choisis parmi le styrène, l'α-méthylstyrène, le méthacrylate de méthyle, l'acrylonitrile, ayant un poids moléculaire moyen ($\overline{M}_p$) de 1 500 à 6 000,

(D) 0,5 à 40 parties en poids d'un caoutchouc greffé, sous forme de particules, ayant une température de transition vitreuse inférieure ou égale à 10°C et ayant un diamètre particulaire moyen ($d_{50}$) de 0,05 à 0,5 µm et qui, pour 100 parties en poids du caoutchouc, contient 30 à 80 parties en poids d'un polymère de styrène, de méthacrylate de méthyle, d'acrylonitrile ou de leurs mélanges, à l'état chimiquement lié, et

(E) 0,5 à 30 parties en poids, d'un caoutchouc greffé, sous forme de particules, ayant une température de transition vitreuse égale ou inférieure à 10°C et ayant un diamètre particulaire moyen ($d_{50}$) de 1 à 5 µm et qui, pour 100 parties en poids du caoutchouc, contient 100 à 150 parties en poids d'un polymère de styrène, d'α-méthylstyrène, de méthacrylate de méthyle, d'acrylonitrile ou de leurs mélanges, à l'état chimiquement lié,

et éventuellement

(F) 20 à 200 parties en poids (pour 100 parties en poids de A+B+C+D+E) d'un ou plusieurs polycarbonates aromatiques.

**2.** Compositions thermoplastiques à mouler, contenant :

(A) 20 à 70 parties en poids d'un ou plusieurs copolymères ou terpolymères thermoplastiques, formés d'au moins une combinaison de monomères vinyliques polymérisée, les monomères étant choisis parmi le styrène, l'α-méthylstyrène, le méthacrylate de méthyle, l'acrylonitrile, le polymère ayant un poids moléculaire moyen ($\overline{M}_p$) de 120 000 à 150 000,

(B) 7,5 à 50 parties en poids d'un ou plusieurs copolymères thermoplastiques, formés de 65 à 85 % en poids de styrène et de 35 à 15 % en poids d'acrylonitrile et ayant un poids moléculaire moyen ($\overline{M}_p$) de 60 000 à 80 000,

(C) 0,5 à 10 parties en poids d'un ou plusieurs copolymères ou terpolymères thermoplastiques, formés d'au moins une combinaison de monomères vinyliques polymérisée, les monomères étant choisis parmi le styrène, l'α-méthylstyrène, le méthacrylate de méthyle, l'acrylonitrile, le polymère ayant un poids moléculaire moyen ($\overline{M}_p$) de 2 000 à 6 000,

(D) 1 à 30 parties en poids d'un caoutchouc greffé, sous forme de particules, ayant une température de transition vitreuse égale ou inférieure à 10°C et ayant un diamètre particulaire moyen ($d_{50}$) de 0,1 à 4 µm et qui, pour 100 parties en poids du caoutchouc, contient 35 à 75 parties en poids d'un polymère du styrène, du méthacrylate de méthyle, de l'acrylonitrile ou de mélanges de ces monomères, sous forme chimiquement liée, et

(E) 1 à 20 parties en poids d'un caoutchouc greffé, sous forme de particule, ayant une température de transition vitreuse égale ou inférieure à 10°C et ayant un diamètre particulaire moyen ($d_{50}$) de 1,2 à 3 µm et qui contient, pour 100 parties en poids du caoutchouc, 110 à 140 parties en poids d'un polymère de styrène, d'α-méthylstyrène, de méthacrylate de méthyle, d'acrylonitrile ou de leurs mélanges à l'état chimiquement lié,

et éventuellement

(F) 25 à 150 parties en poids (pour 100 parties eu poids de A+B+C+D+E) d'un ou plusieurs polycarbonates aromatiques.

**3.** Procédé de préparation de compositions thermoplastiques à mouler selon les revendications 1 et 2, caractérisé en ce qu'on mélange tout d'abord les composants B, C et D puis l'on soumet le mélange résultant à un mélangeage avec un mélange des composants A, E et éventuellement F.

**4.** Utilisation des compositions ou masses à mouler, selon la revendication 1, pour produire des corps moulés.